# EUROPÄISCHE PATENTANMELDUNG

(11) **EP 4 151 343 A1**
(43) Veröffentlichungstag der Anmeldung: **22.03.2023**
(21) Anmeldenummer: 22195406.8
(22) Anmeldetag: 13.09.2022
(51) Int. Cl.: B22F 12/58, B22F 12/52, B22F 12/57, B29C 64/153, B29C 64/329, B29C 64/336, B29C 64/343, B33Y 30/00, B33Y 40/00

(54) **VORRICHTUNG UND VERFAHREN ZUM HERSTELLEN ODER HANDHABEN EINER PULVERMISCHUNG, ADDITIVES FERTIGUNGSVERFAHREN UND PULVERMISCHUNG**

(30) Priorität: 20.09.2021 DE 102021004708
(71) Anmelder: Volkmann GmbH, 59494 Soest (DE)
(72) Erfinder: Tegelkamp, Christopher, Büren (DE)
(74) Vertreter: Grosse Schumacher Knauer von Hirschhausen

(57) **Zusammenfassung**

Die Erfindung betrifft eine Vorrichtung (1) zum Herstellen, insbesondere Herstellen und Dosieren, einer Pulvermischung für einen additiven Fertigungsprozess. Die Pulvermischung für den additiven Fertigungsprozess umfasst ein in einem ersten Behälter (2) angeordnetes erstes Pulver, sowie zumindest ein in zumindest einem weiteren, insbesondere zweiten, Behälter (2') angeordnetes weiteres, insbesondere zweites, Pulver. An dem Auslass (6) des ersten Behälters (2) ist ein Einlass eines erstes Pulver-Transport- und/oder Dosiermittels (4) angeordnet und an dem Auslass (6') des weiteren, insbesondere zweiten, Behälters (2') ein Einlass eines weiteren, insbesondere zweiten, Pulver-Transport- und/oder Dosiermittels (4'). Das erste Pulver ist mittels des ersten Transport- und/oder Dosiermittels (4) und das weitere, insbesondere zweite, Pulver mittels des weiteren, insbeondere zweiten, Transportund/oder Dosiermittels (4') jeweils kontrolliert, insbesondere steuer- und/oder regelbar, zumindest einem, vorzugsweise zumindest ein Sieb (10) umfassenden, Mischbehälter (5) zuführbar. Der Auslass (7) des ersten Transport- und/oder Dosiermittels (4) und der Auslass (7') des weiteren, insbesondere zweiten, Transport- und/oder Dosiermittels (4') sind in oder über dem Mischbehälter (5) übereinander oder nebeneinander, vorzugsweise übereinander oder nebeneinander und jeweils über dem Sieb (10), angeordnet.

## Beschreibung

Die Erfindung betrifft eine Vorrichtung zum Herstellen, insbesondere Herstellen und Dosieren, einer Pulvermischung für einen additiven Fertigungsprozess, nach dem Oberbegriff des Anspruchs 1. Demnach umfasst die Pulvermischung für den additiven Fertigungsprozess ein in einem ersten Behälter angeordnetes erstes Pulver sowie zumindest ein in zumindest einem weiteren Behälter angeordnetes weiteres Pulver, insbesondere ein in einem zweiten Behälter angeordnetes zweites Pulver. Es können ein dritter Behälter für ein drittes Pulver, und gegebenenfalls ein vierter Behälter für ein viertes Pulver und weitere Behälter für weitere Pulver vorgesehen sein. Je mehr Behälter/Pulver vorgesehen sind, desto mehr Pulvermischungen und Rezepturen können mit der Vorrichtung hergestellt werden. Erstes und weiteres (zweites, drittes, ...) Pulver können sich in der Materialzusammensetzung unterscheiden oder in der Korngröße. Das erste Pulver kann ein unverwendetes ("neues") Pulver sein, so wie der Pulverhersteller das Pulver in Verkehr bringt und das weitere (zweite, dritte, ...) Pulver kann ein bereits verwendetes, etwa recyceltes Pulver sein, welches bei einer additiven Fertigung als Rest oder Überschuss zurückblieb. Das erste Pulver kann aus einem ersten Metall oder einer ersten Metallverbindung gebildet sein und das weitere (zweite, dritte, ...) Pulver kann aus einem weiteren (zweiten, dritten, ...) Metall oder einer weiteren (zweiten, dritten, ...) Metallverbindung gebildet sein. Im Folgenden kann mit der Bezeichnung "zweiter" Behälter respektive "zweites" Pulver auch ein weiterer Behälter respektive ein weiteres Pulver umfasst sein, so dass die beschriebenen und beanspruchten Merkmale nicht auf einen ersten und ,ausschließlich' zweiten Behälter respektive erstes und ,ausschließlich' zweites Pulver beschränkt sind.

Die Erfindung betrifft ferner eine Vorrichtung zum Handhaben eines Pulvers oder einer Pulvermischung für ein additives Fertigen eines Fertigungsteils nach Anspruch 10. Die Vorrichtung umfasst zumindest eine Pulver-Fördereinrichtung, welche das Pulver oder die Pulvermischung zumindest einem Behälter und/oder zumindest einer Pulververarbeitungs-Einrichtung zuführt, in der das Pulver oder die Pulvermischung durch additive Fertigung verarbeitet wird.

Die Erfindung betrifft ferner ein Verfahren zum Herstellen einer Pulvermischung nach Anspruch 11 sowie eine Verwendung vor vibrierenden Transport- und/oder Dosiermitteln nach Anspruch 18. Schließlich betrifft die Erfindung ein Verfahren zum additiven Fertigen eines Fertigungsteils mittels eines Pulvers oder einer Pulvermischung nach Anspruch 19 und eine Pulvermischung nach dem Oberbegriff des Anspruchs 20.

### TECHNOLOGISCHER HINTERGRUND

Beim additiven Fertigen werden regelmäßig (Metall-)Pulver als Fertigungsrohstoff eingesetzt. Das Pulver wird mittels einer Pulver-Fördereinrichtung einer Pulver-Verarbeitungs-Einrichtung zugeführt. Beim Verarbeiten werden immer häufiger Pulvermischungen verlangt. Das Mischen der Pulvermischungen erfolgt in einem vorgeschalteten Misch-Prozess, wobei ein erstes und zumindest ein weiteres, insbesondere zweites, Pulver in einem Mischbehälter durch Schütteln vermischt werden und anschließend in einem Lager-Behälter zwischengelagert werden. Das Handling von Pulvermischungen ist insofern aufwändig und kostenintensiv. Hier setzt die Erfindung ein.

### DARSTELLUNG DER ERFINDUNG

Der Erfindung liegt die Aufgabe zugrunde, das Pulverhandling zu vereinfachen und effizienter zu machen. Diese Aufgabe wird durch eine Vorrichtung nach Anspruch 1 gelöst. Weitere Ausgestaltungen sind Gegenstand der Unteransprüche. Bei der Vorrichtung zum Herstellen einer Pulvermischung umfassend ein erstes (unverwendetes) Pulver und ein weiteres, insbesondere zweites, (verwendetes oder recycelts) Pulver ist an dem Auslass des ersten Behälters ein Einlass eines erstes Pulver-Transport- und/oder Dosiermittels angeordnet und an dem Auslass des weiteren, insbesondere zweiten, Behälters ein Einlass eines weiteren, insbesondere zweiten, Pulver-Transport- und/oder Dosiermittels. Ein Pulver-Transport- und/oder Dosiermittel kann eine Rinne oder ein Kanal oder eine beliebige Fördereinrichtung sein. Ein Pulver-Dosiermittel kann eine Rinne umfassen oder einen Kanal oder eine kontrollierbare Fördereinrichtung oder ein Ventil oder eine vergleichbare kontrollierbare Mengen- oder Volumenbegrenzung. Ein Pulver-Transport- und/oder Dosiermittel kann Rinne, Kanal, kontrollierbare Fördereinrichtung und/oder kontrollierbares Ventil umfassen oder daraus gebildet sein. Das erste Pulver ist mittels des ersten Transport- und/oder Dosiermittels und das zweite Pulver ist mittels des zweiten Transport- und/oder Dosiermittels jeweils kontrolliert, insbesondere steuer- und/oder regelbar, zumindest einem, vorzugsweise zumindest ein Sieb umfassenden, Mischbehälter zuführbar. Der Auslass des ersten Transport- und/oder Dosiermittels und der Auslass des weiteren, insbesondere zweiten, Transport- und/oder Dosiermittels sind in oder über dem Mischbehälter übereinander oder nebeneinander, vorzugsweise übereinander oder nebeneinander und jeweils über dem Sieb, angeordnet. Das Pulver respektive die Pulvermischung kann ein Metallpulver respektive eine Metallpulvermischung sein oder ein Kunststoffmaterial umfassen oder daraus gebildet sein. Das Pulver kann auch aus anderen Materialien, wie Keramikmaterialien oder beliebigen Stoffen oder Stoffverbindungen gebildet sein, je nach den Vorgaben des additiven Fertigungsverfahrens.

Sofern die Auslässe nebeneinander angeordnet sind, ist eine Anordnung gemäß einer Y-artigen Geometrie zweckmäßig, d. h. erster und weiteren, insbesondere zweiter, Auslass münden in einen gemeinsamen Einlass des Mischbehälters. In dem gemeinsamen Einlass werden die Fördermengen von erstem und weiteren, insbesondere zweiten, Pulver zusammengeführt.

Mit der hierin beschriebenen Vorrichtung wird eine insbesondere prozessexterne Mischeinrichtung zum Herstellen einer Pulvermischung für das additive Fertigen entbehrlich. Das Pulver kann mit der beschriebenen Vorrichtung im laufenden Fertigungs- oder Pulver-Handling-Prozess gemischt und/oder dosiert werden, ohne dass es aus dem Prozess zunächst entfernt, dann extern gemischt und anschließend dem Prozess wieder zugeführt werden müsste.

Indem an dem Dosier- respektive Mischvorgang die Transport- und/oder Dosiermittel beteiligt sind, bedarf es keiner Zusatzeinrichtung für das Mischen. Die Vorrichtung kann in eine bestehende Pulver-Handling-Einrichtung für das additive Fertigen, insbesondere dort in den laufenden Prozess, mit geringem Aufwand integriert werden. Das Pulver ist für die additive Fertigung stets in Behältern angeordnet und wird stets mittels Transporteinrichtungen zu den Fertigungsapparaten gefördert. Durch die erfindungsgemäße Anordnung wird das Fördern zweier oder mehrerer Pulver kombiniert und es wird mit geringem apparativem Auffand eine Misch- und Dosierfunktion der Förderkomponenten, insbesondere innerhalb des (Pulver-Handling- oder additiven Fertigungs-)Prozesses, bevorzugt ohne Unterbrechung des Materialflusses, realisierbar.

Der Auslass des ersten Transport- und/oder Dosiermittels kann vorteilhafter Weise über dem weiteren, insbesondere zweiten, Transport- und/oder Dosiermittel, insbesondere über dem Auslass des weiteren, insbesondere zweiten, Transport- und/oder Dosiermittels, angeordnet sein, so dass das erste Pulver in dem Mischbehälter kontrollierbar, insbesondere steuer- und/oder regelbar, auf den Auslass des weiteren, insbesondere zweiten, Transport- und/oder Dosiermittels oder in den Bereich des Auslasses des weiteren, insbesondere zweiten Transport- und/oder Dosiermittels fällt. Das erste und das weitere, insbesondere zweite, Pulver fallen somit kontrolliert auf das Sieb, dort findet eine weitere Durchmischung der Pulver statt. Die Menge des ersten Pulvers wird mit dem ersten Transport- und/oder Dosiermittel kontrolliert, die Menge des weiteren, insbesondere zweiten, Pulvers mit dem weiteren, insbesondere zweiten, Transport- und/oder Dosiermittel.

Das erste und/oder das weitere, insbesondere zweite, Transport- und/oder Dosiermittel können bevorzugt als Vibrations-Rinne oder Vibrations-Kanal gebildet sein oder als Vibrations-Dosierrinne oder als Vibrations-Dosierkanal. Die Transport- und/oder Dosiermittel sind getrennt antreibbar respektive steuer- und/oder regelbar. Bevorzugt hat jedes Transport- und/oder Dosiermittel seinen eigenen (motorischen) Antrieb. Es ist zweckmäßig, wenn die Rinnen oder die Kanäle der Transport- und/oder Dosiermittel eine leichte Neigung aufweisen, nämlich hin zur Auslassseite.

Die dem Mischbehälter zugeführte Pulvermenge des ersten Pulvers kann durch die Vibrationsanregung des ersten Transport- und/oder Dosiermittels kontrollierbar sein, insbesondere steuer- und/oder regelbar. Die dem Mischbehälter zugeführte Pulvermenge des weiteren, insbesondere zweiten, Pulvers kann durch die Vibrationsanregung des weiteren, insbesondere zweiten, Transport- und/oder Dosiermittels unabhängig von der des ersten Transport- und/oder Dosiermittels kontrollierbar, insbesondere steuer- und/oder regelbar, sein.

In Transportrichtung gesehen kann vor oder an dem Einlass des ersten und/oder weiteren, insbesondere zweiten, Transport- und/oder Dosiermittels zumindest eine Schwingungs-Entkopplungs-Einrichtung angeordnet sein. Durch die Entkopplung der in der Vorrichtung angeregten Schwingungen wird vermieden, dass eine Vibrationsanregung von einer apparativen Komponente der Vorrichtung (beispielsweise vom ersten Transport- und/oder Dosiermittel) auf eine andere apparative Komponente (beispielsweise auf das weitere, insbesondere zweite, Transport- und/oder Dosiermittel) übertragen wird. So kann der Materialfluss eines der beteiligten Transport- und/oder Dosiermittel auf Null oder nahezu Null reduziert werden, insbesondere wenn nur eines der beiden Pulver zeitweise in den Mischbehälter gelangen soll. Soll beispielsweise ein Mischungsverhältnis von 100:1 erzielt werden (100 Teile erstes (neues) Pulver, 1 Teil weiteres (zweites) (recyceltes) Pulver), wird eines der Transport- und/oder Dosiermittel (das weitere/zweite) mit geringerer (Vibrations-)Anregung betrieben als das andere Transport- und/oder Dosiermittel (das erste), und wenn der kleinere Anteil des einen Pulverbestandteils (weiteres/zweites Pulver) in dem Mischbehälter vollständig enthalten ist, wird das diesbezügliche Transport- und/oder Dosiermittel (weiteres/zweites Transport- und/oder Dosiermittel) deaktiviert. Dass das andere, weiterlaufende Transport- und/oder Dosiermittel (erstes Transport- und/oder Dosiermittel) seine Vibration auf das nach Erreichen der gewünschten Fördermenge stillstehende Transport- und/oder Dosiermittel (zweites Transport- und/oder Dosiermittel) nicht überträgt, wird durch eine oder mehrere Schwingungs-Entkopplungs-Einrichtungen erreicht. Die Schwingungs-Entkopplungseinrichtung kann als Kompensator gebildet sein. Außerdem kann in Transportrichtung gesehen hinter oder an dem Auslass des ersten und/oder des weiteren, insbesondere zweiten, Transport- und/oder Dosiermittels zumindest eine Schwingungs-Entkopplungs-Einrichtung angeordnet sein.

Insofern kann das Mischen so erfolgen, dass die mehreren respektive beiden Pulver nacheinander in den Mischbehälter gelangen und dort durchmischt werden, oder es kann bereits durch kontrolliertes Dosieren mittels den Transport- und/oder Dosiermitteln ein Mischen der Pulver stattfinden, bevor oder während sie in den Mischbehälter eintreten, so dass in dem Mischbehälter lediglich eine Homogenisierung der Pulvermischung erfolgt.

Das Sieb in dem Mischbehälter kann als Vibrationssieb gebildet sein, welches mit einer Vibrationsanregung kontrollierbar, insbesondere steuer- und/oder regelbar, beaufschlagbar ist. Durch die Vibration im Mischbehälter kann die Durchmischung der Pulvermischungs-Bestandteile (erstes u. weiteres, insbesondere zweites, Pulver) optimiert werden. Außerdem wird durch die Vibrationsanregung im Mischbehälter erreicht, dass die Pulvermischung in dem Behälter gleichmäßig verteilt wird und Häufungen oder Verklumpungen oder Verstopfungen werden vermieden.

Gemäß einer vorteilhaften Ausgestaltung der Vorrichtung und im Hinblick auf das weitere Handling der Pulvermischung kann der Mischbehälter einen Auslass für die Pulvermischung haben, insbesondere einen Auslass für die Pulvermischung und einen weiteren Auslass für herausgesiebtes Material, etwa einen Überkornauslass.

Neben der Amplitude und Frequenz der jeweiligen Schwingungsanregungen kann für die Mischprozess-Steuerung respektive -Regelung das Pulver- respektive Behältergewicht ein wichtiger Parameter sein. Ist ein Behälter beispielsweise nicht ausreichend gefüllt, kann ein gewünschtes Mischungsverhältnis nicht erreicht werden. Außerdem ist das Monitoring der Behälter-Füllung (Pulvergewicht) ein Maß für den jeweiligen Materialfluss in der Vorrichtung. Insofern kann es zweckmäßig sein, wenn der erste und/oder der zweite Behälter eine Wiegevorrichtung zur Erfassung des Gewichts des Behälterinhalts aufweist/aufweisen.

Ein vereinfachtes und effizientes Pulverhandling gelingt ferner mit einer Vorrichtung nach Anspruch 10. Die Vorrichtung ist zum Handhaben eines Pulvers oder einer Pulvermischung für ein additives Fertigen eines Fertigungsteils vorgesehen. Die Vorrichtung umfasst zumindest eine Pulver-Fördereinrichtung, welche das Pulver oder die Pulvermischung zumindest einem Behälter und/oder zumindest einer Pulververarbeitungs-Einrichtung zuführt, in der das Pulver oder die Pulvermischung durch additive Fertigung verarbeitet wird. Die Pulver-Fördereinrichtung umfasst eine hierin beschriebene Vorrichtung zum Herstellen/Dosieren einer Pulvermischung für einen additiven Fertigungsprozess oder sie ist daraus gebildet.

Ein vereinfachtes und effizientes Pulverhandling gelingt ferner mit einem Verfahren nach Anspruch 11. Das Verfahren ist zum Herstellen einer Pulvermischung, welche ein erstes, insbesondere unverwendetes, Pulver für einen additiven Fertigungsprozess umfasst und zumindest ein weitere, insbesondere zweites, insbesondere bereits verwendetes und/oder recyceltes, Pulver für einen additiven Fertigungsprozess. Mittels eines ersten Transport- und/oder Dosiermittels wird die Pulvermenge des ersten Pulvers kontrolliert, insbesondere gesteuert und/oder geregelt, und mittels zumindest einem weiteren, insbesondere zweiten, Transport- und/oder Dosiermittel die Pulvermenge des weiteren, insbesondere zweiten, Pulvers. Der Auslass des ersten Transport- und/oder Dosiermittels wird über dem weiteren, insbesondere zweiten, Transport- und/oder Dosiermittel, insbesondere über dem Auslass oder im Bereich des Auslasses des zweiten Transport- und/oder Dosiermittels, angeordnet, so dass das erste und das weiteren, insbesondere zweite, Pulver kontrolliert, insbesondere gesteuert und/oder geregelt, in einen unter dem Auslass des weiteren, insbesondere zweiten, Transport- und/oder Dosiermittels angeordneten Mischbehälter gelangen, insbesondere dort hineinfallen. Das erste Pulver fällt gewissermaßen in den Förderweg des weiteren, insbesondere zweiten, Pulvers.

Das erste und/oder das weitere, insbesondere zweite, Transport- und/oder Dosiermittel kann/können als, insbesondere elektromotorisch antreibbare, Vibrations-Rinne oder als Vibrations-Kanal gebildet sein. Das Dosieren des ersten und/oder des weiteren, insbesondere zweiten, Pulvers kann demnach die Vibrationsanregung des ersten und/oder weiteren, insbesondere zweiten, Transport- und/oder Dosiermittels kontrolliert, insbesondere gesteuert und/oder geregelt, werden. Die Vibrations-Rinne respektive der Vibrations-Kanal kann als Dosier-Rinne respektive Dosier-Kanal gebildet sein.

In dem Mischbehälter kann zumindest ein Sieb angeordnet sein, insbesondere zumindest ein (elektromotorisch antreibbares) Vibrationssieb. Die Antriebe der Vibrationseinrichtungen können unabhängig voneinander steuer-/regelbar sein. Eine möglichst homogene Durchmischung der Pulver wird bevorzugt durch die Vibrationsanregung des Siebes kontrolliert, insbesondere gesteuert und/oder geregelt.

Eine Vibrationsanregung des ersten und/oder zweiten Transport- und/oder Dosiermittels und/oder des Siebs wird durch dämpfende oder kompensierende Mittel nicht oder nahezu nicht übertragen auf andere apparative Komponenten. Das hierin beschriebenen Verfahren kann bevorzugt mit der hierin beschriebenen Misch-DosierVorrichtung betrieben werden.

Ein vereinfachtes und effizientes Pulverhandling gelingt auch mit einer Verwendung eines ersten, als Vibrations-Rinne oder Vibrations-Kanal gebildeten Transport- und/oder Dosiermittels für den Transport eines ersten pulvrigen Materials, sowie zumindest eines weiteren, insbesondere zweiten, als Vibrationsrinne- oder Vibrations-Kanal gebildeten Transport- und/oder Dosiermittels für den Transport zumindest eines weiteren, insbesondere zweiten, pulvrigen Materials, nach Anspruch 18. Die Transport- und/oder Dosiermittel werden als Dosier- und/oder Mischmittel zum Dosieren und/oder Mischen des ersten und weiteren, insbesondere zweiten, pulvrigen Materials eingesetzt, wobei der Auslass des ersten Transport- und/oder Dosiermittels oberhalb des weiteren, insbesondere zweiten, Transport- und/oder Dosiermittels, insbesondere oberhalb des Auslassen des weiteren, insbesondere zweiten, Transport- und/oder Dosiermittels, angeordnet ist, so dass das erste pulvrige Material in oder an den Auslass des weiteren, insbesondere zweiten, Transport- und/oder Dosiermittels oder in den Bereich des Auslasses des weiteren, insbesondere zweiten, Transport- und/oder Dosiermittels gelangt, insbesondere durch Fallen dorthin gelangt.

Ein vereinfachtes und effizientes Pulverhandling gelingt auch mit einem Verfahren zum additive Fertigen eines Fertigungsteils mittels eines Pulvers oder einer Pulvermischung nach Anspruch 19. Bei dem Verfahren ist vorgesehen, dass in einem Pulver-Handling-Prozess das Pulver oder die Pulvermischung bereitgestellt und/oder gefördert wird, wobei in einem anschließenden Pulver-Verarbeitungsschritt das Pulver oder die Pulvermischung mittels additiver Fertigung zu dem Fertigungsteil verarbeitet wird. Der Pulver-Handling-Prozess umfasst ein hierin beschriebenes Misch-/Dosier-Verfahren oder ist daraus gebildet.

Ein vereinfachtes und effizientes Pulverhandling gelingt ferner mit einer Pulvermischung nach Anspruch 20. Die Pulvermischung umfasset ein erstes Pulver für einen additiven Fertigungsprozess und zumindest ein weiteres, insbesondere zweites, Pulver für einen additiven Fertigungsprozess. Die Pulvermischung ist mit einer hierin beschriebenen Misch-/Dosier-Vorrichtung hergestellt, insbesondere mittels eines hierin beschriebenen Misch-/Dosier-Verfahrens.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Vorrichtung zum Herstellen/Dosieren einer Pulvermischung dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1: eine Vorrichtung zum Herstellen/Dosieren einer Pulvermischung in seit-licher Ansicht,
- Fig. 2: eine Vorrichtung gemäß Fig. 1 in Vorder-Schnitt-Ansicht und
- Fig. 3: eine Vorrichtung gemäß der Figuren 1 und 2 in perspektivischer Ansicht.

### DETAILLIERTE BESCHREIBUNG VON AUSFÜHRUNGSBEISPIELEN

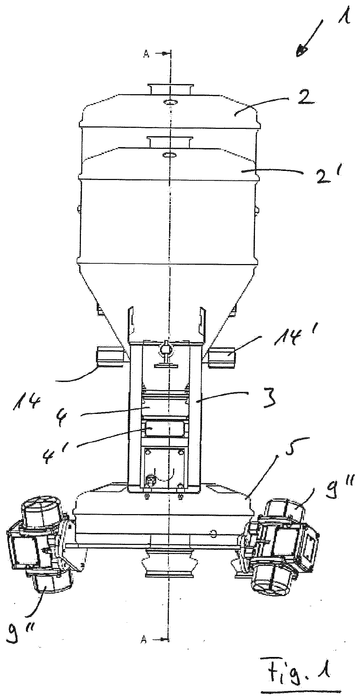

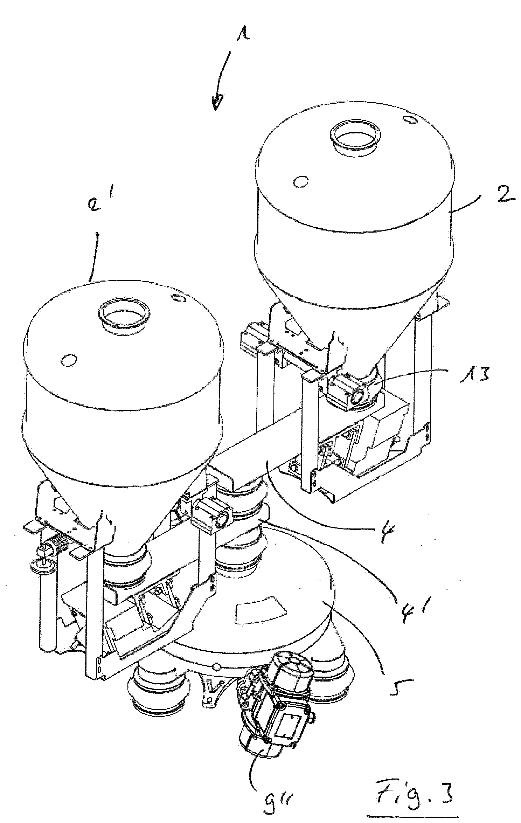

Den Figuren 1 bis 3 kann eine Vorrichtung 1 zum Herstellen einer Pulvermischung entnommen werden. Die Pulvermischung ist für einen additiven Fertigungsprozess bestimmt und kann beispielsweise ein Metallpulver umfassen oder daraus gebildet sein. Die Pulvermischung wird aus einem ersten Pulver gebildet und aus zumindest einem zweiten Pulver oder weiteren Pulvern. Das erste Pulver ist in einem ersten Behälter 2 und das zweite Pulver in einem zweiten Behälter 2' angeordnet. Es können weitere Behälter vorgesehen sein. In den Figuren 1 bis 3 sind exemplarisch zwei Behälter 2, 2' dargestellt. Beide Behälter 2, 2' sind in einem Rahmen 3 der Vorrichtung 1 fixiert.

Das erste Pulver in dem ersten Behälter 2 kann ein neues Pulver sein, so wie es der Pulverhersteller anbietet und in Verkehr bringt. Das weitere respektive zweite Pulver in dem weiteren respektive zweiten Behälter 2' kann ein recyceltes Pulver sein, d. h. ein Pulver, welches schon einmal oder mehrmals in einem additiven Fertigungsprozess eingesetzt wurde, und welches beispielsweise als Rest oder Abfall in dem Fertigungsprozess zurückblieb.

Mit der Mischvorrichtung kann dem neuen Pulver recyceltes Pulver beigemischt werden. Das Mischungsverhältnis wird vom Anwender, insbesondere vom Anwender des Additiven Fertigungsprozesses vorgegeben. Bei hochwertigen Prozessen kann ein Mischungsverhältnis neues/recyceltes Pulver von 100:1 vorgesehen sein und bei weniger hochwertigen Fertigungsvorgaben kann ein Verhältnis von 10:1 oder 2:1 vorgegeben sein.

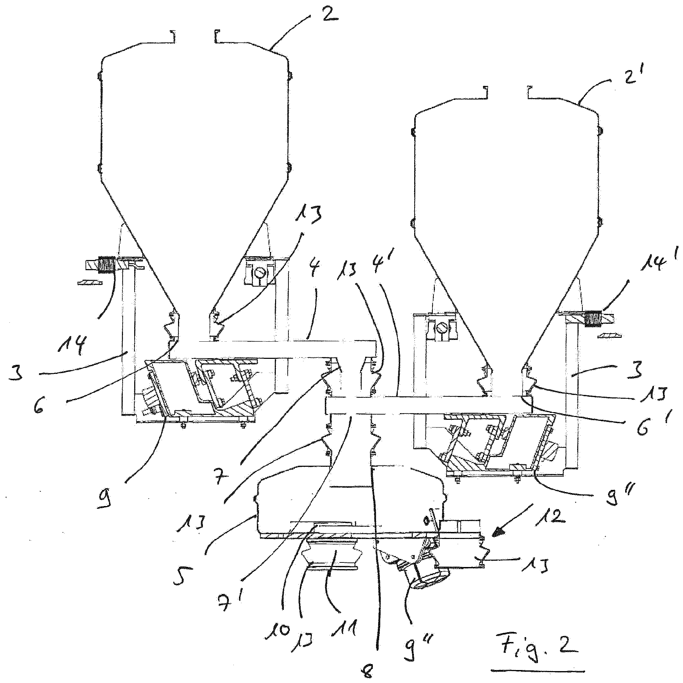

Damit die Pulvermischung den Vorgaben entspricht, muss ein möglichst homogener Mischvorgang gewährleistet werden. Dies gelingt mit der Vorrichtung 1 gemäß der Figuren 1 bis 3, indem die Förderung der Pulvermischungs-Bestandteile mittels der Transport- und/oder Dosiermittel 4, 4' der Vorrichtung 1 dosiert und kontrolliert in einen Mischbehälter 5 gefördert werden. Gemäß der Fig. 2 (Schnitt entlang AA gemäß Fig. 1) gelangt das erste Pulver über den Behälterauslass 6 auf das erste Transport- und/oder Dosiermittel 4 und von dort über den Transport- und/oder Dosiermittel-Auslass 7 in den Einlass 8 des Mischbehälters 5. Das zweite Pulver gelangt über das zweite Transport- und/oder Dosiermittel 4' in den Mischbehälter 5. Beide Transport- und/oder Dosiermittel 4, 4' sind als Vibrations-Rinne 4, 4' gebildet. Jede Vibration-Rinne 4, 4' hat eine eigene Vibrationsanregung mittels Vibrations- respektive Unwucht-Motor 9, 9'. Jeder Vibrations-Motor 9, 9' ist getrennt ansteuerbar. Die Vorrichtung 1 kann so betrieben werden, dass nur Rinne 4 vibriert, so dass nur erstes Pulver in Mischbehälter 5 hineindosiert wird, oder so, dass nur Rinne 4' vibriert, so dass nur zweites Pulver in den Mischbehälter 5 gelangt. Es können auch beide Rinnen 4, 4' vibrieren, so dass sowohl erstes als auch zweites Pulver in den Mischbehälter 5 hineindosiert werden. Der Anteil des ersten (zweiten) Pulvers an der Pulvermischung kann so kontrolliert in einem Bereich von 0% oder nahezu 0% bis zu 100% oder nahezu 100% variiert werden.

Durch Steuerung/Regelung der Vibrationsanregung wird der Materialtransport innerhalb der Vibrations-Rinnen 4, 4' steuer- und/oder regelbar. Soll beispielsweise das erste Pulver mit einem vergleichsweise hohen Materialfluss gefördert werden, beaufschlagt der erste Vibrations-Motor 9 die erste Rinne 4 mit einer starken Vibration, und soll der Materialfluss des zweiten Pulvers geringer sein als der des ersten Pulvers, so wird die zweite Rinne 4' mit schwächerer Vibrationsanregung durch den zweiten Vibrations-Motor 9' beaufschlagt. Soll ein Materialfluss in einer Rinne 4, 4' gestoppt werden, wird der betreffende Unwucht-Motor 9, 9' angehalten.

Der Auslass 7 des ersten Transport- und/oder Dosiermittels 4 befindet sich vertikal oberhalb des Auslasses 7' des zweiten Transport- und/oder Dosiermittels 4', wie in Fig. 2 dargestellt. Der Fig. 2 kann auch entnommen werden, dass der erste Behälter 2 etwas höher in dem Rahmen 3 der Vorrichtung 1 angeordnet ist als der zweite Behälter 2'. Somit fällt das erste Pulver gewissermaßen in den Transport- oder Förderweg des (fallenden) zweiten Pulvers. Von den Transportweg-Auslässen 7, 7' gelangen die Pulver auf die Oberfläche eines Siebs 10 im Mischbehälter 5. Das Sieb 10 kann mittels Unwucht-Motor 9" zur Vibration angeregt werden, so dass sich die Pulver auf dem Sieb 10 zum einen homogen durchmischen, und sodass zum anderen Materialanhäufungen im Mischbehälter 5 vermieden werden. An dem Mischbehälter 5 ist ein Gutkornauslass 11, aus dem die Pulvermischung die Vorrichtung 1 verlässt und ein Grobkornauslass 12, womit Verklumpungen oder Verunreinigungen in den Pulvern aus dem Gemisch herausgesiebt werden.

Zwischen den Komponenten (4, 4', 10), die mit einer Vibration beaufschlagt werden können, sind Kompensatoren 13 angeordnet, welche die Vibrationen dämpfen und dazu beitragen, dass Vibrationen nicht oder nur in geringem Umfang auf andere Komponenten übertragen werden. So befindet sich zwischen erstem Behälter 2 und erstem Transport- und/oder Dosiermittel 4 ein Kompensator 13, sowie zischen zweitem Behälter 2' und zweitem Transport- und/oder Dosiermittel 4', zwischen erstem Transport- und/oder Dosiermittel 4 und zweitem Transport- und/oder Dosiermittel 4' auslassseitig, und zwischen zweitem Transport- und/oder Dosiermittel 4' und Mischbehälter 5. Weitere Kompensatoren 13 können auslassseitig am Mischbehälter 5 angeordnet sein.

Zum Überwachen der Pulvermenge in den Behältern 2, 2' sind am ersten und am zweiten Behälter Wiegeeinrichtungen 14, 14' vorgesehen, mit welchen das BehälterGewicht absolut respektive eine Gewichtsveränderung darin beobachtbar sind.

### BEZUGSZEICHENLISTE

- 1: Vorrichtung zum Pulvermischen
- 2, 2': Behälter
- 3: Rahmen
- 4, 4': Transport- und/oder Dosiermittel, Vibrations-Rinne
- 5: Mischbehälter
- 6, 6': Behälterauslass
- 7, 7': Transport- und/oder Dosiermittel-Auslass
- 8: Einlass Mischbehälter
- 9, 9', 9": (Unwucht-)Motor, Vibrations-Motor
- 10: Sieb
- 11: Gutkornauslass
- 12: Grobkornauslass, Überkornauslass
- 13: Kompensator, Schwingungs-Entkopplungs-Einrichtung
- 14, 14': Wiegeeinrichtung

## Patentansprüche

1. Vorrichtung (1) zum Herstellen, insbesondere Herstellen und Dosieren, einer Pulvermischung für einen additiven Fertigungsprozess, wobei die Pulvermischung für den additiven Fertigungsprozess ein in einem ersten Behälter (2) angeordnetes erstes Pulver umfasst sowie zumindest ein in zumindest einem weiteren Behälter angeordnetes weiteres Pulver, insbesondere ein in einem zweiten Behälter (2') angeordnetes zweites Pulver, **dadurch gekennzeichnet,**
**dass** an dem Auslass (6) des ersten Behälters (2) ein Einlass eines erstes Pulver-Transport- und/oder Dosiermittels (4) angeordnet ist und an dem Auslass (6') des weiteren, insbesondere zweiten, Behälters (2') ein Einlass eines weiteren, insbesondere zweiten, Pulver-Transport- und/oder Dosiermittels (4'),
**dass** das erste Pulver mittels des ersten Transport- und/oder Dosiermittels (4) und das weitere, insbesondere zweite, Pulver mittels des weiteren, insbesondere zweiten, Transport- und/oder Dosiermittels (4') jeweils kontrolliert, insbesondere steuer- und/oder regelbar, zumindest einem, vorzugsweise zumindest ein Sieb (10) umfassenden, Mischbehälter (5) zuführbar ist, und
**dass** der Auslass (7) des ersten Transport- und/oder Dosiermittels (4) und der Auslass (7') des weiteren, insbesondere zweiten, Transport- und/oder Dosiermittels (4') in oder über dem Mischbehälter (5) übereinander oder nebeneinander, vorzugsweise übereinander oder nebeneinander und jeweils über dem Sieb (10), angeordnet sind.

2. Vorrichtung (1) nach Anspruch 1, **dadurch gekennzeichnet, dass** der Auslass (7) des ersten Transport- und/oder Dosiermittels (4) über dem weiteren, insbesondere zweiten, Transport- und/oder Dosiermittel (4'), insbesondere über dem Auslass (7') des weiteren, insbesondere zweiten, Transport- und/oder Dosiermittels (4'), angeordnet ist, so dass das erste Pulver in dem Mischbehälter (5) kontrollierbar, insbesondere steuer- und/oder regelbar, auf den Auslass (7') des weiteren, insbesondere zweiten, Transport- und/oder Dosiermittels (4') oder in den Bereich des Auslasses (7') des weiteren, insbesondere zweiten, Transport- und/oder Dosiermittels (4') fällt.

3. Vorrichtung (1) nach Anspruch 1 oder 2, **dadurch gekennzeichnet, dass** das erste und/oder das weitere, insbesondere zweite, Transport- und/oder Dosiermittel (4, 4') als Vibrations-Rinne (4 4') oder Vibrations-Kanal gebildet ist oder als Vibrations-Dosierrinne oder als Vibrations-Dosierkanal, oder als schaltbares, insbesondere getaktet betreibbares, Ventil.

4. Vorrichtung (1) nach Anspruch 3, **dadurch gekennzeichnet, dass** die dem Mischbehälter (5) zugeführte Pulvermenge des ersten Pulvers durch die Vibrationsanregung des ersten Transport- und/oder Dosiermittels (4) kontrollierbar, insbesondere steuer- und/oder regelbar, ist, und dass die dem Mischbehälter (5) zugeführte Pulvermenge des weiteren, insbesondere zweiten, Pulvers durch die Vibrationsanregung des weiteren, insbesondere zweiten, Transport- und/oder Dosiermittels (4') unabhängig von der des ersten Transport- und/oder Dosiermittels (4) kontrollierbar, insbesondere steuer- und/oder regelbar, ist.

5. Vorrichtung (1) nach einem der Ansprüche 1 bis 4, **dadurch gekennzeichnet, dass** in Transportrichtung gesehen vor oder an dem Einlass des ersten und/oder weiteren, insbesondere zweiten, Transport- und/oder Dosiermittels (4, 4') zumindest eine Schwingungs-Entkopplungs-Einrichtung (13) angeordnet ist.

6. Vorrichtung (1) nach einem der Ansprüche 1 bis 5, **dadurch gekennzeichnet, dass** in Transportrichtung gesehen hinter oder an dem Auslass (7, 7') des ersten und/oder des weiteren, insbesondere zweiten, Transport- und/oder Dosiermittels (4, 4') zumindest eine Schwingungs-Entkopplungs-Einrichtung (13) angeordnet ist.

7. Vorrichtung (1) nach einem der Ansprüche 1 bis 6, **dadurch gekennzeichnet, dass** das Sieb (10) in dem Mischbehälter (5) als Vibrationssieb gebildet ist, welches mit einer Vibrationsanregung kontrollierbar, insbesondere steuer- und/oder regelbar, beaufschlagbar ist.

8. Vorrichtung (1) nach Anspruch 7, **dadurch gekennzeichnet, dass** der Mischbehälter (5) einen Auslass (11) für die Pulvermischung hat, insbesondere einen Auslass (11) für die Pulvermischung und einen Überkornauslass (12).

9. Vorrichtung (1) nach einem der Ansprüche 1 bis 8, **dadurch gekennzeichnet, dass** der erste und/oder der weitere, insbesondere zweite, Behälter (2, 2') eine Wiegevorrichtung (14, 14') zur Erfassung des Gewichts des Behälterinhalts aufweist.

10. Vorrichtung zum Handhaben eines Pulvers oder einer Pulvermischung für ein additives Fertigen eines Fertigungsteils, wobei die Vorrichtung zumindest eine Pulver-Fördereinrichtung umfasst, welche das Pulver oder die Pulvermischung zumindest einem Behälter und/oder zumindest einer Pulververarbeitungs-Einrichtung zuführt, in der das Pulver oder die Pulvermischung durch additive Fertigung verarbeitet wird, **dadurch gekennzeichnet, dass** die Pulver-Fördereinrichtung eine Vorrichtung (1) nach einem der Ansprüche 1 bis 9 umfasst oder daraus gebildet ist.

11. Verfahren zum Herstellen einer Pulvermischung umfassend ein erstes Pulver für einen additiven Fertigungsprozess und zumindest ein weiteres, insbesondere zweites, Pulver für einen additiven Fertigungsprozess, wobei mittels eines ersten Transport- und/oder Dosiermittels die Pulvermenge des ersten Pulvers kontrolliert, insbesondere gesteuert und/oder geregelt wird und mittels zumindest eines weiteren, insbesondere zweiten, Transport- und/oder Dosiermittels die Pulvermenge des weiteren, insbesondere zweiten, Pulvers, und wobei der Auslass des ersten Transport- und/oder Dosiermittels über dem weiteren, insbesondere zweiten, Transport- und/oder Dosiermittel, insbesondere über dem Auslass oder im Bereich des Auslasses des weiteren, insbesondere zweiten, Transport- und/oder Dosiermittels, angeordnet wird, so dass das erste und das weitere, insbesondere zweite, Pulver kontrolliert, insbesondere gesteuert und/oder geregelt, in einen unter dem Auslass des weiteren, insbesondere zweiten, Transport- und/oder Dosiermittels angeordneten Mischbehälter gelangen, insbesondere dort hineinfallen.

12. Verfahren nach Anspruch 11, wobei das erste und/oder das weitere, insbesondere zweite, Transport- und/oder Dosiermittel als Vibrations-Rinne oder als Vibrations-Kanal gebildet ist/sind.

13. Verfahren nach Anspruch 12, wobei das Dosieren des ersten und/oder des weiteren, insbesondere zweiten, Pulvers durch die Vibrationsanregung des ersten und/oder weiteren, insbesondere zweiten, Transport- und/oder Dosiermittels kontrolliert, insbesondere gesteuert und/oder geregelt, wird.

14. Verfahren nach einem der Ansprüche 11 bis 13, wobei in dem Mischbehälter zumindest ein Sieb angeordnet ist, insbesondere zumindest ein Vibrationssieb.

15. Verfahren nach Anspruch 14, wobei die Durchmischung der Pulver durch die Vibrationsanregung des Siebes kontrolliert, insbesondere gesteuert und/oder geregelt, wird.

16. Verfahren nach einem der Ansprüche 11 bis 15, wobei eine Vibrationsanregung des ersten und/oder weiteren, insbesondere zweiten, Transport- und/oder Dosiermittels und/oder des Siebs durch dämpfende oder kompensierende Mittel nicht oder nahezu nicht übertragen wird auf andere apparative Komponenten.

17. Verfahren nach einem der Ansprüche 11 bis 16, bei dem eine Vorrichtung (1) nach einem der Ansprüche 1 bis 10 betrieben wird.

18. Verwendung eines ersten, als Vibrations-Rinne (4) oder Vibrations-Kanal gebildeten Transport- und/oder Dosiermittels (4) für den Transport eines ersten pulvrigen Materials, sowie zumindest eines weiteren, insbesondere zweiten, als Vibrations-Rinne (4') oder Vibrations-Kanal gebildeten Transport- und/oder Dosiermittels (4') für den Transport zumindest eines weiteren, insbesondere zweiten, pulvrigen Materials, als Dosier- und/oder Mischmittel zum Dosieren und/oder Mischen des ersten und weiteren, insbesondere zweiten, pulvrigen Materials, wobei der Auslass (7) des ersten Transport- und/oder Dosiermittels (4) oberhalb dem weiteren, insbesondere zweiten, Transport- und/oder Dosiermittel (4'), insbesondere oberhalb des Auslassen (7') des weiteren, insbesondere zweiten, Transport- und/oder Dosiermittels (4'), angeordnet ist, so dass das erste pulvrige Material in oder an den Auslass (7') des weiteren, insbesondere zweiten, Transport- und/oder Dosiermittels (4') oder in den Bereich des Auslasses (7') des weiteren, insbesondere zweiten, Transport- und/oder Dosiermittels (4') gelangt, insbesondere durch Fallen dorthin gelangt.

19. Verfahren zum additiven Fertigen eines Fertigungsteils mittels eines Pulvers oder einer Pulvermischung, wobei in einem Pulver-Handling-Prozess das Pulver oder die Pulvermischung bereitgestellt und/oder gefördert wird, wobei in einem anschließenden Pulver-Verarbeitungsschritt das Pulver oder die Pulvermischung mittels additiver Fertigung zu dem Fertigungsteil verarbeitet wird, und wobei der Pulver-Handling-Prozess ein Verfahren nach einem der Ansprüche 11 bis 17 umfasst oder gemäß einem Verfahren nach einem der Ansprüche 11 bis 17 gebildet ist.

20. Pulvermischung umfassend ein erstes Pulver für einen additiven Fertigungsprozess und zumindest ein weiteres, insbesondere zweites, Pulver für einen additiven Fertigungsprozess, **dadurch gekennzeichnet, dass** die Pulvermischung mit einer Vorrichtung (1) nach einem der Ansprüche 1 bis 10 hergestellt wurde, insbesondere mittels einem Verfahren nach einem der Ansprüche 11 bis 17.
